# EUROPEAN PATENT APPLICATION

(11) **EP 0 735 002 A1**
(43) Date of publication of application: **02.10.1996**
(21) Application number: 96105002.8
(22) Date of filing: 28.03.1996
(51) Int. Cl.: C01F 5/00, C01F 5/40, C10L 10/04

(54) **Method and apparatus for dissolving a magnesium compound in water**

(30) Priority: 31.03.1995 US 414366
(71) Applicant: SIEMENS AKTIENGESELLSCHAFT, 80333 München (DE)
(72) Inventor: Finckh, Hermann, Dr., 90427 Nürnberg (DE); Herbst, Peter, 27474 Cuxhaven (DE)

(57) **Abstract**

An aqueous solution of a magnesium compound is formed by dissolving a water-soluble magnesium compound out of a solid preparation which contains the magnesium compound. The solid preparation is mixed with water and the soluble components of the solid preparation and the water form a liquid phase. Insoluble components of the solid preparation in the water are sedimented. The liquid phase is then decanted from the sediment and the aqueous solution of the magnesium compound is supplied for further use. The apparatus for dissolving the water-soluble magnesium compound includes at least one mixing tank and a supply for supplying the solid preparation with the magnesium compound and water to the mixing tank. A mixer is operatively associated with the mixing tank. A drain line with a drain valve is connected at the bottom of the mixing tank, so that the sediment may be drained from the mixing tank. A decanting line communicates with the mixing tank at an intermediate level thereof, and a decanting pump forces the liquid phase through the decanting line for use or intermediate storage.

## Description

The invention relates to a method and an apparatus for dissolving a magnesium compound in water and for forming an aqueous solution of the magnesium compound. The invention is particularly directed to the field of gas turbines.

International Application PCT/DE93/00821 being designated, inter alia, for the United States, incorporated herein by reference, and Published International Application WO 89/08803 A1, corresponding to U.S. application Serial No. 08/133,463, also being incorporated herein by reference, disclose a method for operating a gas turbine engine fuelled with a liquid fuel containing vanadium. In order to inhibit corrosion effects produced by low-melting vanadium compounds, magnesium is fed to a combustion installation within the gas turbine to react with the vanadium and produce high-melting compounds which do not produce heavy corrosion effects. The feeding of the magnesium is accomplished by feeding an aqueous solution of a water-soluble magnesium compound, namely magnesium sulfate or Epsom Salt. The aqueous solution is fed to a combustion chamber of the gas turbine engine concurrently with, but separately from, the fuel and it is injected directly into a flame produced by combustion of the fuel. By these means, only a particularly low dosage of magnesium relative to the vanadium being fed with the fuel is required, thus keeping the amount of ashes introduced into the turbine of the gas turbine engine particularly low.

Preparing an aqueous solution of a water-soluble magnesium compound such as magnesium sulfate or Epsom Salt for use in a gas turbine engine and making use of a commercially available solid preparation containing this compound must take into account that such a commercially available preparation having a technical-grade purity only may contain additives besides the desired compound, comprising unavoidable impurities as well as additions which might improve the handling of the preparation, in particular by inhibiting caking. Such additives might eventually form solid residuals in a solution made by mixing the preparation in water, in particular by reacting with impurities contained in the water, even if the water has been deionized in accordance with usual practice. To make the solution suitable for use in a gas turbine engine, such solid residuals must be avoided or, if this is not economically feasible, carefully removed.

It is accordingly an object of the invention to provide a method and an apparatus for dissolving a magnesium compound in water, which satisfies the foregoing requirements and which overcomes all disadvantages of the heretofore-known methods and devices of this general type and which result in a continuous and highly pure supply of the magnesium compound solution. It is a further object of the invention to provide a method and an apparatus which allow the use of low-grade precursor materials (solid preparation) and still result in the high degree of purity of the solution.

With the foregoing and other objects in view there is provided, in accordance with the invention, a novel method of dissolving a water-soluble magnesium compound from a solid preparation containing the magnesium compound in water and obtaining an aqueous solution of the magnesium compound. The method comprises the following steps:
- mixing a solid preparation containing a water-soluble magnesium compound with water;
- dissolving soluble components of the solid preparation in the water and forming a liquid phase;
- sedimenting insoluble components of the solid preparation in the water and forming a sediment; and
- decanting the liquid phase from the sediment and obtaining an aqueous solution of the magnesium compound from the liquid phase.

In accordance with another mode of the invention, the solid preparation is mixed with the water by agitating the water.

In accordance with an added mode of the invention, the method further comprises diluting the liquid phase with additional water to obtain the aqueous solution. The liquid phase may be diluted by expanding a volume of the liquid phase by a factor of at least 3, or by about 10.

In accordance with an additional mode of the invention, a ratio between a molar content of the magnesium compound in the aqueous solution and a molar content of the water in the aqueous solution are adjusted to be no more than 1:20, and preferably no more than 1:60.

In accordance with a further mode of the invention, the foregoing steps are repeatedly performed and the aqueous solution is supplied to a buffer tank for continuous withdrawal. This is particularly advantageous when the solution is to be supplied to a gas turbine engine which is supplied with a vanadium-containing fuel.

In accordance with yet a further mode of the invention, the aqueous solution is adjusted in dependence on the vanadium contained in the fuel. In that case, the method comprises supplying the aqueous solution in an amount defining a ratio between a rate of parts by weight of magnesium being provided with the aqueous solution and a rate of parts by weight of vanadium being supplied with the fuel between 0.7 and 4.

In accordance with a mode of the invention, the water-soluble magnesium compound is magnesium sulfate, and the solid preparation contains a crystalline compound comprising magnesium sulfate and water.

The water is preferably deionized water.

With the foregoing and other objects in view there is also provided, in accordance with the invention, an apparatus for dissolving a water-soluble magnesium compound from a solid preparation containing the magnesium compound in water and obtaining an aqueous solution of the magnesium compound, the apparatus comprising:
- at least one mixing tank having a bottom and to be filled from the bottom to a given upper level;
- a supply for supplying a solid preparation containing a water-soluble magnesium compound and water to the at least one mixing tank;
- a mixer operatively associated with the at least one mixing tank;
- a drain line with a drain valve communicating with the at least one mixing tank at the bottom and leading to a dump;
- a decanting line communicating with the at least one mixing tank at an intermediate level thereof located between the bottom and the upper level; and
- a decanting pump communicating with the decanting line for decanting a liquid phase disposed in the at least one mixing tank from a sediment disposed in the at least one mixing tank below the intermediate level and obtained by mixing the solid preparation with the water in the at least one mixing tank forming the liquid phase by dissolving soluble components of the preparation and forming the sediment by sedimenting insoluble components of the preparation, and providing an aqueous solution of the magnesium compound from the liquid phase.

In accordance with an added feature of the invention, the mixer comprises at least one recirculation line having a respective recirculation valve and communicating with the decanting pump and the at least one mixing tank.

In accordance with an additional feature of the invention, the at least one mixing tank has a respective decanting tube dipping into the at least one mixing tank, being open thereinto at the intermediate level and communicating with the decanting line through a respective decanting valve.

In accordance with a further feature of the invention, the apparatus further comprises a buffer tank communicating with the at least one mixing tank via the decanting pump for receiving the aqueous solution and communicating with a withdrawing pump for continuous withdrawing of the aqueous solution.

In accordance with yet a further feature of the invention, the apparatus includes a dilution tank communicating with the at least one mixing tank via the decanting pump for receiving the liquid phase and communicating with the supply for supplying additional water into the dilution tank for diluting the liquid phase to obtain the aqueous solution. A mixer may be operatively connected to the dilution tank.

In accordance with yet another feature of the invention, the apparatus further includes: a buffer tank communicating with the dilution tank; a conveying pump for conveying the aqueous solution from the dilution tank to the buffer tank; and a withdrawing pump communicating with the buffer tank for continuous withdrawing of the aqueous solution from the buffer tank.

In accordance with yet an added feature of the invention, the at least one mixing tank is a plurality of mixing tanks.

In accordance with again an added feature of the invention, the withdrawing pump communicates with a gas turbine engine having a fuel supply for supplying a vanadium-containing fuel thereto, for providing the aqueous solution thereto.

In accordance with again an additional feature of the invention, the apparatus comprises: a flowmeter disposed in the fuel supply for obtaining a rate of vanadium being supplied to the gas turbine engine with the fuel; a flowmeter connected to the withdrawing pump for obtaining a rate of magnesium being provided to the gas turbine engine with the aqueous solution; an adjustment valve connected to the withdrawing pump; and a control unit communicating with both the flowmeters and with the adjustment valve for adjusting the rate of magnesium being supplied with respect to the rate of vanadium being supplied.

With the above and other objects in view there is also provided, in accordance with the invention, an apparatus of the foregoing type which comprises: at least one mixing tank; supply means for supplying water and a solid preparation containing a water-soluble magnesium compound to the at least one mixing tank; mixing means operatively associated with the at least one mixing tank for mixing the water and the solid preparation and obtaining a mixture thereof in the at least one mixing tank; draining means communicating with the at least one mixing tank for completely draining the at least one mixing tank; and decanting means communicating with the at least one mixing tank for decanting a liquid phase from a sediment, the liquid phase being formed by sedimenting insoluble components of the preparation forming the sediment from the mixture, and providing an aqueous solution of the magnesium compound from the liquid phase.

Other features which are considered as characteristic for the invention are set forth in the appended claims.

Although the invention is illustrated and described herein as embodied in a method and apparatus for dissolving a magnesium compound in water, it is nevertheless not intended to be limited to the details shown, since various modifications and structural changes may be made therein without departing from the spirit of the invention and within the scope and range of equivalents of the claims.

The construction of the invention, however, together with additional objects and advantages thereof will be best understood from the following description of the specific embodiment when read in connection with the accompanying drawings.
Fig. 1 is a schematic diagram of an apparatus for obtaining an aqueous solution of a water-soluble magnesium compound; and
Fig. 2 is a similar diagram of an addition to the apparatus shown in Fig. 1 making the apparatus suitable for providing the aqueous solution to a gas turbine engine.

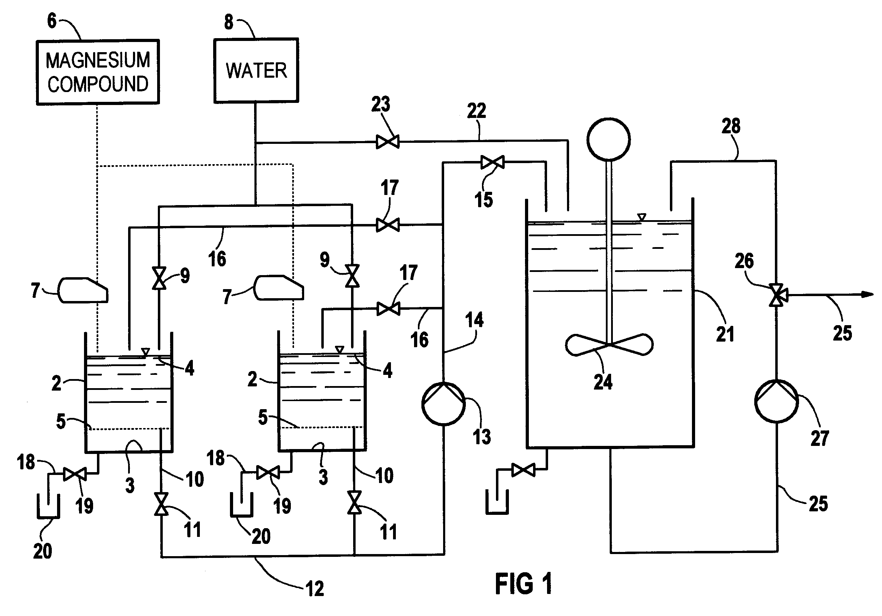

Referring now to the figures of the drawing in detail and first, particularly, to Fig. 1 thereof, there is seen an apparatus for dissolving a water-soluble magnesium compound from a solid preparation containing the magnesium compound in water and obtaining an aqueous solution of the magnesium compound. The apparatus includes two mixing tanks 1 and 2, each of them having a bottom 3 and to be filled to a given upper level 4. A sediment sedimenting from a mixture of a liquid phase and solids dispersed therein in one of the mixing tanks 1,2 may fill the mixing tank 1,2 from its bottom 3 to a respective intermediate level 5 disposed between its bottom 3 and its upper level 4. Generally, the intermediate level 5 will be nearer to the bottom 3 than to the upper level 4 according to a relation between a volume of a sediment to be reasonably expected and a volume of the remaining liquid phase, if the mixing tan 1,2 is filled to its upper level 4. in this respect, Figure 1 is not to be understood as showing a scaled-down representation of a real mixing tank 1,2. Also, the flat bottom 3 shown is not meant to limit the construction of a real mixing tank 1,2 to a specific constructional feature. By referring to a bottom 3 of a mixing tank 1,2, it is always meant to refer to a level in the mixing tank 1,2 being a geodetically lower limit of every column of liquid aand/or solid being disposable in the mixing tank 1,2.

The ingredients for forming the desired aqueous solution, namely the solid preparation and the water, are to be supplied by suitable supply means including a store 6 for the solid preparation, a scale 7 for weighing amounts of the preparation to be supplied to a mixing tank 1,2 and suitable conveyors like screw conveyors, vibrating conveyors or conveyor belts for supplying the solid preparation and a store 8 for deionized water communicating with a suitable supply valve 9, as well as an installation of lines to convey the water to a mixing tank 1,2. The store 8 might eventually be replaced by or associated to a plant for deionizing water being connected to a public supply network for water in usual quality and composition.

After being supplied to a mixing tank 1 or 2, the solid preparation and the water are thoroughly mixed. Thereby, a liquid phase formed from the water and soluble components of the preparation dissolved therein and a solid phase comprising insoluble components of the preparation and being dispersed in the liquid phase are obtained. Subsequently, the solid phase is allowed to settle or sediment, forming a sediment on the bottom of the mixing tank 1,2.

After the solid phase has sedimented to a sufficient degree, preferably essentially completely, the liquid phase is decanted from the solid phase. This is done by means of a decanting tube 10 dipping into the mixing tank 1,2 and communicating with the mixing tank 1,2 at its intermediate level 5. To activate the decanting step, the decanting tube 10 has a decanting valve 11 incorporated therein which is to be opened to decant the liquid phase, and communicates with a decanting line 12 leading to a decanting pump 13. In the example shown, each one of the mixing tanks 1,2 has a respective decanting tube 10 with a respective decanting valve 11 incorporated therein, and both decanting tubes 10 communicate with a common decanting line 12. Thus, the mixing tanks 1,2 can be used alternately, which may give a more constant supply of the liquid phase over the time. Eventually, more than two mixing tanks 1,2 can be implemented for a further improvement of the constancy of the liquid phase supply to be reached. Anyhow, the liquid phase conveyed out of a mixing tank 1,2 by the decanting pump 13 is supplied to an outlet line 14, which may at needs be shut off by an outlet valve 15 ioncorporated therein. The outlet valve 15 may also be used to regulate the outlet of the liquid phase through the outlet line 14.

The mixing of the solid preparation and the water in each one of the mixing tanks 1,2 is also accomplished by employing the decanting pump 13. To this end each mixing tank 1,2 has a respective recirculating line 16 equipped with a recirculating valve 17 and connected to the outlet line 14. By recirculating liquid through a decanting tube 10, the respective decanting valve 11, the decanting line 12, decanting pump 13, outlet line 14 and respective recirculating line 16 and recirculating valve 17, the mixture in the mixing tank 1,2 is well agitated, thus assuring a homogeneous distribution of the solid preparation in the liquid. As an alternative for the mixer realized by providing the recirculating lines 16 and recirculating valves 17, a mixer comprising an impeller dipping into a mixing tank might be provided. For a respective example, see below.

In order to remove a sediment and to provide for rinsing before use or between two uses, each mixing tank 1,2 has a drain line 18 connected to its bottom 3, equipped with a drain valve 19. The drain line 18 leads to a dump 20, wherein all residuals having remained in the mixing tank 1,2 after use and comprising the sediment may be dumped.

The outlet line 14 transports the liquid phase obtained to a dilution tank 21, where it is diluted by adding additional water supplied through the additional supply line 22 and the additional supply valve 23, which may be used for regulating the supply, from the store 8 already mentioned. To assure rapid and thorough mixing of the additional water into the liquid phase, a mixer 24 in the form of an impeller and equipped with a suitable drive is provided in the dilution tank 21. Instead of this mixer 24, mixing could be accomplished by recirculating the liquid through conveying line 25, three-way conveying valve 26, conveying pump 27 and recirculating line 28, thus realizing the same mixer as provided at each one of the mixing tanks 1,2.

The desired aqueous solution is obtained from the liquid phase by diluting with additional water, which is accomplished in the diluting tank 21. this dilution is not essential for the invention in its widest scope, but it provides that solid components which have not yet been removed from the liquid phase might eventually dissolve as the liquid phase is diluted and thus a concentration of dissolved components which might hinder the dissolution of the solid components is lowered. To this end, an expansion of the volume of the liquid phase by dilution to a considerable degree is considered, preferredly at least threefold, more preferredly at least tenfold.

The aqueous solution obtained is finally conveyed from the dilution tank 21 through conveying line 25 and conveying valve 26, powered by conveying pump 27.

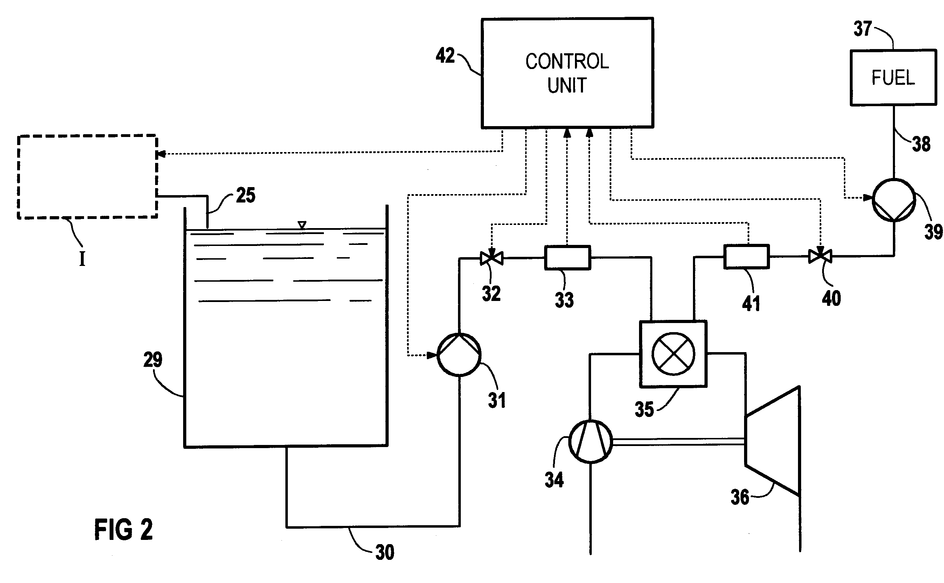

Figure 2 shows additions to the apparatus shown and described previously, which in particular make it suitable to serve certain purposes of a gas turbine engine. The arrangement of Figure 1 is represented by a box I drawn with dashed lines, the conveying line 25 being partly shown.

The conveying line 25 conveys the aqueous solution obtained inta a buffer tank 29, where it is stored and kept ready for continuous removal, thus balancing out the necessarily incontinuous operation of the parts of the apparatus described previously. Thew buffer tank 29 is expediently sized to accomodate the aqueous solution in an amount sufficient to satisfy a demand of one day, as related to the particular application which is envisaged.

To withdraw aqueous solution from the buffer tank 29, it is equipped with a withdrawing line 30 and a withdrawing pump 31. To regulate the withdrawing, the withdrawing line 30 has also a withdrawing valve 32 and a flowmeter 33 to monitor the withdrawing.

In the application particularly shown, the aqueous solution is delivered to a gas turbine engine comprising a compressor 34, a combustion unit 35 and a turbine 36 which powers the compressor 34. The turbine 36 may also power an external device (not shown), or a further turbine (equally not shown) may be provided to power an external device. The gas turbine engine is fuelled from a fuel store 37, via fuel line 38, fuel pump 39 and fuel valve 40 to the combustion unit 35. A flowmeter 41 for monitoring the supply of fuel is also provided in the fuel line 38. The supply of the aqueous solution provides for inhibiting harmful effects which might result from vanadium contained in the fuel, as explained hereinabove. To this end, the aqueous solution is fed to the combustion unit 35 concurrently with the fuel and providing magnesium in an amount sufficient to convert substantially all the vanadium supplied with the fuel to harmless compounds.

To serve all managing and regulating purposes involved in operating the apparatus, the apparatus has a control unit communicating with all elements of the apparatus including the elements of Fig.1 requiring operational action. It is noted that such connections are not shown in Fig. 1 for the sake of clarity, but are considered to be present instead. The elements requiring operational action are in particular all valves 9, 11, 15, 17, 19, 23, 26, 32 and 40, the scale 7, all pumps 13, 27, 31 and 39, the mixer 24 and the flowmeters 33 and 41. Further elements might be present, according to the requirements of each individual case.

## Claims

1. A method of dissolving a water-soluble magnesium compound from a solid preparation containing the magnesium compound in water and obtaining an aqueous solution of the magnesium compound, the method which comprises:
- mixing a solid preparation containing a water-soluble magnesium compound with water;
- dissolving soluble components of the solid preparation in the water and forming a liquid phase;
- sedimenting insoluble components of the solid preparation in the water and forming a sediment; and
- decanting the liquid phase from the sediment and obtaining an aqueous solution of the magnesium compound from the liquid phase.

2. The method according to claim 1, wherein the mixing step comprises agitating the water.

3. The method according to claim 1, which further comprises diluting the liquid phase with additional water to obtain the aqueous solution.

4. The method according to claim 3, wherein the diluting step comprises expanding a volume of the liquid phase by a factor of at least 3.

5. The method according to claim 3, wherein the diluting step comprises expanding a volume of the liquid phase by a factor of at least 10.

6. The method according to claim 1, which comprises adjusting a ratio between a molar content of the magnesium compound in the aqueous solution and a molar content of the water in the aqueous solution to be no more than 1:20.

7. The method according to claim 1, which comprises adjusting a ratio between a molar content of the magnesium compound in the aqueous solution and a molar content of the water in the aqueous solution to be no more than 1:60.

8. The method according to claim 1, which comprises obtaining the aqueous solution repeatedly and supplying the aqueous solution to a buffer tank for continuous withdrawal.

9. The method according to claim 1, which further comprises feeding the aqueous solution to a gas turbine engine being supplied with a vanadium-containing fuel.

10. The method according to claim 9, which comprises supplying the aqueous solution in an amount defining a ratio between a rate of parts by weight of magnesium being provided with the aqueous solution and a rate of parts by weight of vanadium being supplied with the fuel between 0.7 and 4.

11. The method according to claim 1, wherein the water soluble compound is magnesium sulfate, and the solid preparation contains a crystalline compound comprising magnesium sulfate and water.

12. The method according to claim 1, wherein the mixing step comprises mixing with deionized water.

13. An apparatus for dissolving a water-soluble magnesium compound from a solid preparation containing the magnesium compound in water and obtaining an aqueous solution of the magnesium compound, the apparatus comprising:
- at least one mixing tank having a bottom and to be filled from said bottom to a given upper level;
- a supply for supplying a solid preparation containing a water-soluble magnesium compound and water to said at least one mixing tank;
- a mixer operatively associated with said at least one mixing tank;
- a drain line with a drain valve communicating with said at least one mixing tank at said bottom and leading to a dump;
- a decanting line communicating with the at least one mixing tank at an intermediate level thereof located between said bottom and said upper level; and
- a decanting pump communicating with said decanting line for decanting a liquid phase disposed in said at least one mixing tank from a sediment disposed in said at least one mixing tank below said intermediate level and obtained by mixing the solid preparation with the water in said at least one mixing tank forming the liquid phase by dissolving soluble components of the preparation and forming the sediment by sedimenting insoluble components of the preparation, and providing an aqueous solution of the magnesium compound from the liquid phase.

14. The apparatus according to claim 13, wherein said mixer comprises at least one recirculation line having a respective recirculation valve and communicating with said decanting pump and said at least one mixing tank.

15. The apparatus according to claim 13, wherein said at least one mixing tank has a respective decanting tube dipping into said at least one mixing tank, being open thereinto at said intermediate level and communicating with said decanting line through a respective decanting valve.

16. The apparatus according to claim 13, comprising a buffer tank communicating with said at least one mixing tank via said decanting pump for receiving the aqueous solution and communicating with a withdrawing pump for continuous withdrawing of the aqueous solution.

17. The apparatus according to claim 13, comprising a dilution tank communicating with the at least one mixing tank via the decanting pump for receiving the liquid phase and communicating with said supply for supplying additional water into said dilution tank for diluting the liquid phase to obtain the aqueous solution.

18. The apparatus according to claim 17, comprising a mixer operatively connected to said dilution tank.

19. The apparatus according to claim 17, comprising:
- a buffer tank communicating with said dilution tank;
- a conveying pump for conveying the aqueous solution from said dilution tank to said buffer tank;
- a withdrawing pump communicating with said buffer tank for continuous withdrawing of the aqueous solution from said buffer tank.

20. The apparatus according to claim 13, wherein said at least one mixing tank is a plurality of mixing tanks.

21. The apparatus according to claim 19, wherein said at least one mixing tank is a plurality of mixing tanks.

22. The apparatus according to claim 16, wherein said withdrawing pump communicates with a gas turbine engine having a fuel supply for supplying a fuel containing vanadium thereto, for providing the aqueous solution thereto.

23. The apparatus according to claim 22, comprising:
- a flowmeter disposed in said fuel supply for obtaining a rate of vanadium being supplied to said gas turbine engine with the fuel;
- a flowmeter connected to said withdrawing pump for obtaining a rate of magnesium being provided to said gas turbine engine with the aqueous solution;
- an adjustment valve connected to said withdrawing pump; and
- a control unit communicating with both said flowmeters and with said adjustment valve for adjusting the rate of magnesium being supplied with respect to the rate of vanadium being supplied.

24. The apparatus according to claim 19, wherein said withdrawing pump communicates with a gas turbine engine having a fuel supply for supplying a vanadium-containing fuel thereto, for providing the aqueous solution thereto.

25. The apparatus according to claim 24, comprising:
- a flowmeter disposed in said fuel supply for obtaining a rate of vanadium being supplied to said gas turbine engine with the fuel;
- a flowmeter connected to said withdrawing pump for obtaining a rate of magnesium being provided to said gas turbine engine with the aqueous solution;
- an adjustment valve connected to said withdrawing pump; and
- a control unit communicating with both said flowmeters and with said adjustment valve for adjusting the rate of magnesium being provided with respect to the rate of vanadium being supplied.

26. An apparatus for dissolving a water-soluble magnesium compound from a solid preparation containing the magnesium compound in water and obtaining an aqueous solution of the magnesium compound, the apparatus comprising
- at least one mixing tank;
- supply means for supplying water and a solid preparation containing a water-soluble magnesium compound to the at least one mixing tank;
- mixing means operatively associated with said at least one mixing tank for mixing the water and the solid preparation and obtaining a mixture thereof in said at least one mixing tank;
- draining means communicating with said at least one mixing tank for completely draining said at least one mixing tank; and
- decanting means communicating with said at least one mixing tank for decanting a liquid phase from a sediment, the liquid phase being formed by sedimenting insoluble components of the preparation forming the sediment from the mixture, and providing an aqueous solution of the magnesium compound from the liquid phase.

27. The apparatus according to claim 26, comprising providing means fluidically connecting said mixing tank to a gas turbine engine having a fuel supply for supplying a vanadium-containing fuel thereto, for providing the aqueous solution to said gas turbine engine.

28. The apparatus according to claim 27, comprising control means being operatively connected to said mixing tank and to said fuel supply for obtaining a rate of magnesium being provided with the aqueous solution and a rate of vanadium being supplied with the fuel, and for adjusting the rate of magnesium with respect to the rate of vanadium.
